# EUROPÄISCHE PATENTANMELDUNG

(11) **EP 1 758 054 A1**
(43) Veröffentlichungstag der Anmeldung: **28.02.2007**
(21) Anmeldenummer: 05017810.2
(22) Anmeldetag: 17.08.2005
(51) Int. Cl.: G06Q 30/00

(54) **Verfahren und Anordnung von Vorrichtungen zur Prüfung und Korrektur von buchungsrelevanten Daten innerhalb eines computergestützten Filialsystems**

(71) Anmelder: Deutsche Post AG, 53113 Bonn (DE)
(72) Erfinder: Kranz, Jürgen, 50374 Erftstadt (DE); Hofer, Oliver, 13349 Berlin (DE)
(74) Vertreter: Jostarndt, Hans-Dieter

(57) **Zusammenfassung**

Die Erfindung betrifft ein Verfahren und eine zugehörige Anordnung von Vorrichtungen zur Prüfung und Korrektur von an einem Client (10) erzeugten buchungsrelevanten Daten, bei dem/der die Daten zur Aufbereitung und Weiterleitung über eine Kommunikationskomponente (20) an mehrere Servicekomponenten (40) eines Backends übermittelt werden. Nach der Aufbereitung im Backend werden die Datensätze an Umsysteme (30) übermittelt. Vor der Aufbereitung der Daten erfolgt durch eine Archivierungskomponente (43) eine Archivierung der Rohdaten in einem Archiv (33). Eine Sessionkomponente (46) bildet daraufhin Gruppen (Sessions) aus mehreren Datensätzen und eine Abstimmungskomponente kumuliert die Daten. Ferner filtert eine Rohdatenkomponente (42) die aufbereiteten Daten, paketiert diese und übermittelt sie an Umsysteme (30). Die Sessionkomponente (46), die Abstimmungskomponente (47) oder ein Umsystem (30) können eine Fehlermeldung erzeugen, welche an eine Auftragsvergabekomponente (60) weitergeleitet wird. Die Auftragsvergabekomponente (60) erzeugt einen Korrekturauftrag, der von einem Korrektur-Client (11;12) ausgeführt wird. Dabei fragt der Korrektur-Client fehlerhafte Datensätze in einem Archiv (33) und/oder den Umsystemen (30) an, korrigiert diese und stellt sie über die Kommunikationskomponente (20) wieder in das Archiv (33) ein.

## Beschreibung

Die Erfindung betrifft eine Anordnung von Vorrichtungen zur Prüfung und Korrektur von buchungsrelevanten Daten, wobei die Anordnung aus wenigstens einem Client in einem Frontend besteht, der über eine Kommunikationskomponente mit einem Backend in Verbindung steht. Das Backend wird dabei durch mehrere Servicekomponenten gebildet und an die Kommunikationskomponente sind ferner mehrere Umsysteme angeschlossen. Der Client weist Mittel zur Erzeugung von Daten und zur Übermittlung der Daten über die Kommunikationskomponente an die Servicekomponenten auf. Die Servicekomponenten umfassen Mittel zur Aufbereitung der Daten.

Die Erfindung betrifft ferner ein Verfahren zum Betrieb einer Anordnung von Vorrichtungen zur Prüfung und Korrektur von Daten mehrerer Clients und ein computerlesbares Medium, auf dem Befehle zur Durchführung des erfindungsgemäßen Verfahrens auf einem Computermittel gespeichert sind.

Gegenwärtig gibt es eine ganze Reihe von Geschäftsfeldern, die ein weit verzweigtes Filial- oder Automatensystem umfassen, um Kunden einen flächendeckenden Zugang zu verschiedenen Dienstleistungen eines Unternehmens zu ermöglichen. Beispielhaft können dazu Verkehrsunternehmen genannt werden, die ihren Kunden an zahlreichen Bahnhöfen und Flughäfen ihre Serviceleistungen anbieten. Hierzu gehören beispielsweise der Verkauf von Bahn- oder Flugkarten, die Annahme von Gepäck oder das Mieten von Kraftfahrzeugen.

Ein anderes Beispiel stellen Postunternehmen dar, die in fast jedem Ort in einem Land den Kunden eine umfangreiche Auswahl von Postdienstleistungen zur Verfügung stellen, wie zum Beispiel die Annahme von Briefen und Paketen, der Verkauf von Postwertzeichen sowie eine ganze Reihe von Bankdienstleistungen. Ferner können in Filialen Dienstleistungen im Bereich der Telekommunikation angeboten werden, wie es beispielsweise durch den Abschluss eines Mobiltelefonvertrags gegeben ist. Die genannten Dienstleistungen werden dabei nicht nur in eigenen Filialen des Postunternehmens, sondern auch an Automaten, bei Servicepartnern oder über Internetauftritte angeboten und die Gesamtheit der an ein Netzwerk angeschlossenen Frontendstellen wird im Folgenden zur Vereinfachung als Filialsystem bezeichnet.

Üblicherweise werden die Verkaufs- und Beratungsdienstleistungen aus Gründen der Kosteneffizienz und Sicherheit durch Informationstechnik unterstützt. Die Abbildung von Geschäftsprozessen in einem Filialsystem erfordert jedoch einen hohen informationstechnischen Aufwand und üblicherweise müssen unterschiedliche Arten von Daten zwischen einer Filiale und einer zentralen Datenbank oder einem Zentralrechner ausgetauscht werden. Dabei wird das Filialsystem vorzugsweise durch eine Vielzahl von Clients gebildet, die über ein Netzwerk mit einem zentralen Verwaltungssystem verbunden sind.

Beim Betrieb eines derartigen Filialsystems ist es erforderlich, dass erzeugte Daten eine Prüfung unter verschiedenen Aspekten durchlaufen. Beispielsweise können bereits am Client formale Prüfungen von Datenfeldern nach Feldlänge oder der Belegung von Pflichtfeldern erfolgen. Weitere Prüfungen können die inhaltliche Prüfung der Daten unter buchhalterischen Gesichtspunkten beinhalten. Neben der Prüfung von Daten kann auch eine Aufbereitung der Daten beispielsweise nach den Anforderungen verschiedener Umsysteme erfolgen. Bei diesen Vorgängen sind stets die Grundsätze der ordnungsmäßigen Buchführung (GoB) und der ordnungsmäßigen DV-gestützten Buchführungssysteme (GoBS) zu beachten.

Da fehlerhafte Datensätze in verschiedenen Bereichen des Filialsystems auftreten können, ist es zweckmäßig, ein in das System integriertes Prüf- und Korrekturmanagement bereitzustellen, das fehlerhafte Datensätze erkennt, Korrekturprozesse durchführt und korrigierte Datensätze wieder in das System einstellt. Aufgabe der Erfindung ist es daher, eine Anordnung von Vorrichtungen bereit zu stellen, welche die Prüfung und Korrektur von buchungsrelevanten Daten mehrerer Komponenten eines computergestützten Filialsystems ermöglicht. Dabei soll insbesondere die manuelle Mitwirkung von Personen beim Korrekturmanagement ermöglicht werden.

Aufgabe der Erfindung ist es ferner, ein Verfahren zum Betrieb der Anordnung und ein computerlesbares Medium bereitzustellen, auf dem Befehle zur Durchführung des Verfahrens auf einem Computermittel gespeichert sind.

Erfindungsgemäß wird diese Aufgabe durch eine Anordnung von Vorrichtungen mit den Merkmalen des unabhängigen Anspruchs 1 gelöst. Vorteilhafte Weiterbildungen der Anordnung ergeben sich aus den Unteransprüchen 2 und 3. Die Aufgabe wird ferner durch ein Verfahren nach Anspruch 4 gelöst. Vorteilhafte Ausführungsformen des Verfahrens ergeben sich aus den Unteransprüchen 5-8. Anspruch 9 gibt ein computerlesbares Medium an, auf welchem Befehle zur Durchführung des erfindungsgemäßen Verfahrens gespeichert sind.

Die Erfindung umfasst eine Anordnung von Vorrichtungen zur Prüfung und Korrektur von buchungsrelevanten Daten, bestehend aus wenigstens einem Client in einem Frontend, der über eine Kommunikationskomponente mit einem Backend in Verbindung steht. Das Backend wird durch mehrere Servicekomponenten gebildet und an die Kommunikationskomponente sind ferner vorzugsweise mehrere Umsysteme angeschlossen. Der Client weist Mittel zur Erzeugung von Daten und zur Übermittlung der Daten über die Kommunikationskomponente an die Servicekomponenten auf. Dabei umfassen die Servicekomponenten Mittel zur Aufbereitung der Daten.

Erfindungsgemäß umfasst die Anordnung von Vorrichtungen wenigstens eine Archivkomponente, welche Mittel zur Archivierung von Daten in wenigstens einem Archiv aufweist. Zu der Anordnung gehören ferner eine Sessionkomponente, umfassend Mittel zur Bildung von Gruppen (Sessions) aus mehreren Datensätzen und eine Abstimmungskomponente, umfassend Mittel zur Kumulation und Abstimmung von durch die Sessionkomponente gebildeten Gruppen aus Datensätzen. Ferner ist eine Rohdatenkomponente, umfassend Mittel zur Filterung von Datensätzen vorgesehen. Die Filterung kann gemäß allgemeiner Anforderungen oder spezifischer Anforderungen der Umsysteme erfolgen. Die Rohdatenkomponente umfasst ferner Mittel zur Paketierung und Übermittlung der Datensätze an Umsysteme.

Ein wesentlicher Bestandteil der Erfindung ist wenigstens ein Korrektur-Client, der Mittel zur Abfrage und Korrektur von fehlerhaften Datensätzen in dem Archiv und/oder den Umsystemen aufweist. Der Korrektur-Client ist ebenfalls über die Kommunikationskomponente an die Servicekomponenten des Backends angeschlossen und weist Mittel zum Einstellen korrigierter Datensätze in wenigstens ein Archiv der Umsysteme auf. Der Korrektur-Client erhält Korrekturaufträge von einer Auftragsvergabekomponente (Action Request System - ARS), die wiederum Fehlermeldungen von einer Korrekturkomponente erhält.

Die Korrekturkomponente kann Fehlermeldungen von verschiedenen Servicekomponenten des Backends erhalten. Erfindungsgemäß gehören dazu wenigstens die Sessionkomponente, die Abstimmungskomponente, die Rohdatenkomponente und die Umsysteme. Zur Steuerung und Übermittlung von Nachrichten zwischen den Servicekomponenten, den Clients, den Korrektur-Clients und den Umsystemen umfasst die Kommunikationskomponente eine Routing-Komponente.

In einem besonders bevorzugten Ausführungsbeispiel der Erfindung umfassen die Servicekomponenten des Backends eine Dialogkomponente zur Übermittlung von statuslosen Aufrufen von Daten in den Umsystemen und/oder einem Archiv. Der Korrektur-Client weist Mittel zur Übermittlung eines Aufrufs an die Dialogkomponente auf, welche aufgrund des Aufrufs fehlerhafte Datensätze oder weitere Informationen aus dem Archiv und/oder den Umsystemen bereitstellt. Die Übermittlung des Aufrufs von dem Korrektur-Client an die Dialogkomponente erfolgt vorzugsweise über einen Web-Service, während der Zugriff auf das Archiv vorzugsweise über die Archivkomponente erfolgt.

Durch die Verwendung eines Web-Service für den Aufruf über die Dialogkomponente ist eine schnelle Übertragung von Aufrufen und Antworten beispielsweise über das Internet möglich. Ein Web-Service stellt Dienstleistungen über das Internet (HTTP) zur Verfügung. Da Web-Services alle die gleichen offenen Standards zur Kommunikation nutzen, sind sie übergreifend kompatibel und miteinander verzahnbar.

Von der Erfindung umfasst ist ferner ein Verfahren zur Prüfung und Korrektur von Daten und zum Betrieb der erfindungsgemäßen Anordnung von Vorrichtungen. Bei dem Verfahren werden verschiedene Daten durch die Archivkomponente archiviert, von der Sessionkomponente zu Gruppen (Sessions) zusammengefasst und die entstandenen Sessions in der Abstimmungskomponente kumuliert und abgestimmt. Die Rohdatenkomponente filtert die Rohdatensätze, paketiert sie und übermittelt die gefilterten Rohdaten an Umsysteme. Dabei erzeugen die Sessionkomponente oder die Abstimmungskomponente eine Fehlermeldung, falls eine dieser Komponenten einen fehlerhaften Datensatz feststellt und übermitteln die Fehlermeldung an die Korrekturkomponente. Diese leitet die Fehlermeldung an eine Auftragsvergabekomponente weiter, welche einen Korrekturauftrag erzeugt und diesen an wenigstens einen Korrektur-Client übermittelt. Ein Korrekturauftrag besteht beispielsweise aus einem Fehlerprotokoll, der Referenz auf einen fehlerhaften Datensatz und/oder eine Session, sowie weiteren Merkmalen, die aus dem Fehlerprotokoll extrahiert werden können.

Fehlermeldungen können auch direkt an die Auftragsvergabekomponente übergeben werden. Beispielsweise hat es sich als vorteilhaft erwiesen, dass Umsysteme Fehlermeldungen direkt an die Auftragsvergabekomponente übermitteln. In Anlehnung an die stark gekapselte Struktur der Servicekomponenten des Backends kann darüber hinaus zur Einlieferung von Daten der Umsysteme eine Einlieferungskomponente vorgesehen sein, welche beispielsweise eine Fehlermeldung über die Kommunikationskomponente an die Korrekturkomponente übergibt.

In einem besonders bevorzugten Ausführungsbeispiel der Erfindung wird ein Mitarbeiter des Korrekturmanagements über die Auftragsvergabekomponente über einen neuen Korrekturauftrag informiert. Eine vergebene Ticketnummer dient dann zur Identifizierung des Korrekturauftrags innerhalb des Korrekturmanagementsystems. Der Korrektur-Client fragt nach Erhalt eines Korrekturauftrags fehlerhafte Datensätze in dem Archiv und/oder den Umsysteme an und korrigiert diese. Dabei greift der Korrektur-Client vorzugsweise über einen Web-Service auf die Dialogkomponente zu, welche den Aufruf über die Kommunikationskomponente beispielsweise an die Archivkomponente weiterleitet.

Nach der Korrektur stellt der Korrektur-Client die korrigierten Datensätze vorzugsweise in das Archiv ein. Der Korrektur-Client versieht einen korrigierten Datensatz dabei mit der Routinginformation des fehlerhaften Datensatzes und einer Referenz auf den fehlerhaften Datensatz. Vor der Einstellung können die korrigierten Datensätze von einer Prüfkomponente geprüft werden. Die Routing-Komponente der Kommunikationskomponente übernimmt zur Durchführung des Verfahrens eine Steuerung und Übermittlung von Nachrichten zwischen den Servicekomponenten, den Clients, den Korrektur-Clients und den Umsystemen.

Von der Erfindung umfasst ist ferner ein computerlesbares Medium, auf dem Befehle zum Ausführen der Schritte des Verfahrens auf einem Computermittel gespeichert sind.

Ein Vorteil der Erfindung liegt in der Aufbereitung und Prüfung von Datensätzen mehrerer Clients, bevor diese an angeschlossene Umsysteme übermittelt werden. Dabei werden alle Bearbeitungen von Daten gemäß der GoB- und GoBS-Anforderungen durchgeführt. Die Speicherung der Rohdatensätze in einem Archiv, bevor diese geprüft und aufbereitet werden, erfüllt die Erfordernisse eines Grundbuchs und ermöglicht einen Aufruf der Datensätze durch den Korrektur-Client. Komponenten können somit stets auf die ursprünglich von einem Client erzeugten Rohdatensätze zugreifen, durch den Einsatz der verschiedenen Komponenten der Qualitätssicherung kann jedoch gewährleistet werden, dass die Umsysteme möglichst nur korrekte Datensätze erhalten. Dadurch wird eine Vielzahl von Fehlermeldungen der Umsysteme vermieden.

Der Einsatz eines oder mehrerer Korrektur-Clients bringt den Vorteil mit sich, dass Korrekturen durch ein verzweigtes Korrekturenmanagement an verschiedenen Positionen des Filialsystems durchgeführt werden können. Der Korrektur-Client hat über die Kommunikationskomponente Zugriff auf alle Servicekomponenten des Systems. Dabei ermöglicht insbesondere der Einsatz der Dialogkomponente einen schnellen und statuslosen Zugriff auf alle archivierten Daten, da dieser in der Lage ist, für den Korrektur-Client den Web-Service zu hosten, über den der Client arbeitet.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: ein Ausführungsbeispiel eines computergestützten Filialsystems, in welches das erfindungsgemäße Korrekturmanagement integriert werden kann;
- Fig. 2: ein besonders bevorzugtes Ausführungsbeispiel der erfindungsgemäßen Verfahrensabläufe bei der Aufbereitung, Prüfung und Korrektur von buchungsrelevanten Datensätzen; und
- Fig. 3: den Online-Zugriff der Korrektur-Clients auf ein Archiv.

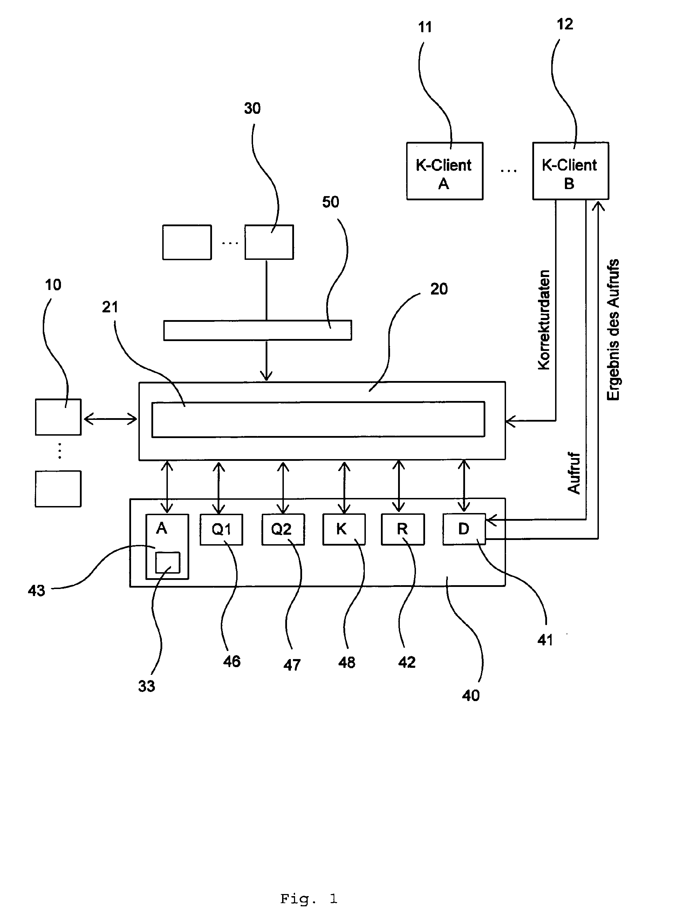

In Fig. 1 ist ein computergestütztes Filialsystem dargestellt, dessen Bestandteil die erfindungsgemäße Anordnung von Vorrichtungen zur Prüfung und Korrektur von Daten sein kann. Die Anordnung umfasst wenigstens eine Kommunikationskomponente 20, welche zur Übermittlung von Daten zwischen wenigstens einem Client 10 und mehreren Servicekomponenten zur Aufbereitung der Daten angeordnet ist. Die Servicekomponenten sind in ihrer Gesamtheit als Funktionsblock 40 dargestellt und können verschiedene gekapselte Einzelkomponenten mit spezifischen Funktionen umfassen.

An die Kommunikationskomponente 20 sind ferner ein oder mehrere Umsysteme 30 angeschlossen, welche von der Kommunikationskomponente vorzugsweise durch eine Sicherheitsschicht 50 getrennt sind. Zu den Clients zählt ferner wenigstens ein Korrektur-Client, über welchen auf fehlerhafte Datensätze zugegriffen und Korrekturen in das System eingespeist werden können. In dem Ausführungsbeispiel der Fig. 1 sind zwei Korrektur-Clients 11 und 12 dargestellt.

Zu den Servicekomponenten 40 zählt wenigstens eine Korrekturkomponente 48, welche in der Fig. 1 auch mit K bezeichnet ist. Die Korrekturkomponente ist verantwortlich für die Abwicklung aller fachlich notwendigen Korrekturen an buchungsrelevanten Datensätzen und Vorgängen. Als Quellen, welche der Korrekturkomponente Fehler melden, kommen beispielsweise die Umsysteme 30 in Betracht, falls diese fehlerhafte Rohdatensätze geliefert bekommen haben. Fehlermeldungen kommen ferner von verschiedenen Prüf- und Verarbeitungseinheiten innerhalb der Servicekomponenten. Das Korrekturmanagement hat zum Ziel, durch eine zeitgerechte Korrektur fehlerhafter Datensätze die Arbeit der Servicekomponenten 40 und der daran angeschlossenen Umsysteme zu unterstützen und eine fehlerfreie Arbeit des Gesamtsystems zu ermöglichen. Dabei sollen sämtliche Korrekturen so erfolgen, dass die GoB- und GoBS-Konformität des Gesamtsystems gewährleistet ist.

Bei der Anordnung gemäß Fig. 1 handelt es sich beispielsweise um ein Retail-System, das die Durchführung von Geschäftsvorgängen an den Clients 10 im Frontend ermöglicht. Bei den Geschäftsvorgängen kann es sich um Transaktionen wie Käufe, Einlieferungen, Vertragsabschlüsse oder Abfragen handeln. Die Anordnung wird vorzugsweise durch ein Computersystem gebildet, das möglichst einfach erweiterbar oder veränderbar ist. Solche Computeranordnungen für Filialsysteme werden dazu üblicherweise stark modular ausgebildet. Bei den Modulen handelt es sich um standardisierte Komponenten, welche von mehreren anderen Komponenten verwendet werden können. Üblicherweise kann der Bereich des Clients als Frontend bezeichnet werden, während der Bereich der Serverapplikationen oder weiterer Umsysteme als Backend bezeichnet wird.

Die Clients 10 sind vorzugsweise als Computeranwendungen ausgeführt, die beispielsweise in mehreren Filialen eines Unternehmens angeordnet sind. Dabei können die Clients zu einem Client-Server-System gehören und/oder eine gemeinsame Plattform verwenden, welche allen Clients gemeinsame Funktionalitäten bereitstellt. In einem besonders bevorzugten Ausführungsbeispiel der Erfindung können die Clients jedoch auch ohne ständige Anbindung an die Servicekomponenten des Backends arbeiten, wodurch sie offlinefähig sind. Die Verbindung der Clients mit anderen Komponenten kann über das Internet in Form von Web-Services oder die Kommunikationskomponente 20 erfolgen, welche verschiedene Wege des Nachrichtentransfers verwirklichen kann.

An einem Client werden diverse Geschäftsvorgänge durchgeführt, wobei bei den Vorgängen auf Daten der Umsysteme zugegriffen und Rohdaten für die Umsysteme erzeugt werden. Werden in den Filialen eines Postunternehmens beispielsweise Telekommunikationsdienstleistungen wie Telefonanschlüsse oder Mobiltelefonverträge verschiedener Anbieter angeboten, müssen die Daten der jeweiligen Systeme der Anbieter an den Clients in der Filiale verfügbar gemacht werden. Das Gleiche gilt für Bankgeschäfte, Warenverkäufe und natürlich die üblichen postalischen Dienstleistungen wie beispielsweise die Annahme von Postsendungen oder der Verkauf von Postwertzeichen.

Ferner müssen an den Clients anfallende Rohdaten an die Umsysteme übermittelt und Abfragen von Daten ermöglicht werden.

Neben den Clients 10, an denen Vorgänge bei der Abwicklung von Geschäften mit Kunden durchgeführt werden, umfasst die Anordnung vorzugsweise mehrere Korrektur-Clients. Beispielsweise kann eine Vielzahl von Korrektur-Clients an verschiedenen Standorten des Filialsystems angeordnet sein, wodurch die Korrekturaufgaben z.B. an Bereiche mit unterschiedlichen Kompetenzen verteilt werden können. Durch eine Client-Server-Architektur kann der Standort der Clients beliebig verändert werden. Es ist jedoch auch möglich, dass Korrekturen lediglich an einem zentralen Korrektur-Client durchgeführt werden, oder dass die Korrekturfunktionen auf einem Rechner im Frontend integriert sind, welcher auch zur Durchführung von Geschäftsvorgängen mit Kunden geeignet ist. Im letzten Fall würde der Client 10 beispielsweise mit einem der Korrektur-Clients 11 oder 12 zusammenfallen.

Die Korrektur-Clients 11 und 12 sind vorzugsweise so ausgebildet, dass sie Daten visualisieren und für die Korrektur übernehmen können. Ferner umfassen sie Mittel zum Einstellen korrigierter Datensätze in das System. Vorzugsweise wird keine Kommunikation zwischen den einzelnen Korrektur-Clients ermöglicht. Gleiche Daten können von mehreren Clients geladen und visualisiert werden. Die Bearbeitung eines speziellen Datensatzes durch mehrere Korrektur-Clients wird jedoch zweckmäßigerweise verhindert. Die Korrektur-Clients können beispielsweise über eine Citrix-Farm angebunden werden.

Die Kommunikationskomponente 20 ist vorzugsweise für die gesamte Kommunikation zwischen den Komponenten des Systems zuständig. Eine zu versendende Nachricht gelangt in die interne Datenhaltung der Kommunikationskomponente, von der aus die Nachrichtenverteilung einer Routing-Komponente 21 angesteuert wird. Dieses Routing sorgt dafür, dass die Nachrichten an die richtigen Ausgänge geschickt werden. Dabei ist es bevorzugt, dass die Nachrichten lediglich logische Adressen aufweisen, aus denen die Kommunikationskomponente die entsprechenden physischen Adressen erzeugt und die Datensätze an den jeweiligen Ausgang schickt. Dabei sieht die Kommunikationskomponente sowohl Servicekomponenten als auch Umsysteme als Zieladressen an.

Kommunikationskomponenten zur Abwicklung des Nachrichtentransfers zwischen zwei Bereichen eines Computersystems sind bekannt und können auf übliche Weise realisiert werden. Nachrichten können unterschiedlich geformte Informationen tragen. Beispielsweise stellen Datensätze, Aufrufe oder Protokolle Nachrichten dar. Die gesamte Kommunikation der Kommunikationskomponente 20 basiert vorzugsweise auf SOAP (Simple Object Access Protocol) und XML (Extensible Markup Language).

XML ist eine Beschreibungssprache und stellt einen einheitlichen Standard für den einfachen, neutralen und flexiblen Datenaustausch dar. Eine SOAP-Nachricht ist nach dem Head-Body Pattern modelliert. Im Head-Bereich der Nachricht werden die Metainformationen der Nachricht untergebracht. Diese können Informationen über das Routing der Nachricht, über eine eventuelle Verschlüsselung und/oder über die Zugehörigkeit zu einer Transaktion umfassen. Der SOAP-Body enthält die eigentlichen Informationen der Nachricht, zu denen komplette Objekte, Parameter für aufzurufende Methoden oder Rohdatensätze gehören können. Die beiden Teile der SOAP-Nachricht werden vorzugsweise in einem SOAP-Envelope zusammengefasst.

In einem besonders bevorzugten Ausführungsbeispiel der Erfindung erfolgt durch die Servicekomponenten 40 des Backends eine Aufbereitung und Weiterleitung von jeglichen Daten der Clients und Umsysteme, während die endgültige Verarbeitung der Daten durch die Clients und Umsysteme selbst durchgeführt wird. Die Nachrichtenübermittlung zwischen den einzelnen Servicekomponenten erfolgt über die Kommunikationskomponente 20, so dass jede Servicekomponente zweckmäßigerweise eine Schnittstelle zur Kommunikationskomponente aufweist. Dabei kann es vorgesehen sein, dass Daten von einzelnen Servicekomponenten nicht direkt von dieser Schnittstelle geholt werden, sondern eine Nachrichten verarbeitende Komponente (Active Message Handler - AMH) diese Aufgabe übernimmt.

Der AMH bildet eine Abstraktionsschicht, welche einzelne Servicekomponenten von der Notwendigkeit befreit, spezifisches Wissen über die Kommunikationskomponente zu haben. Zum anderen kann er den aktiven Part übernehmen, Daten aus der Kommunikationskomponente abzuholen und in die Servicekomponenten hineinzureichen. Dabei ist es eine wichtige Eigenschaft des Active Message Handlers, dass er eine flexible und gleichzeitig standardisierte Möglichkeit bietet, den Nachrichtenverkehr zwischen der Kommunikationskomponente und den Servicekomponenten des Backends asynchron zu gestalten.

Für einzelne Servicekomponenten kann es erstrebenswert sein, dass die Servicekomponenten 40 des Backends nicht direkt an eine Schnittstelle zur Kommunikationskomponente 20 gehen, da viele Aufgaben von allen Servicekomponenten in immer gleicher Funktion aber unterschiedlicher Ausprägung erledigt werden müssen. So muss das richtige Protokoll beachtet werden, die Daten müssen aktiv abgeholt werden, eine Skalierung muss geschaffen werden und in der jeweiligen Servicekomponente ist ein schneller Empfänger erforderlich. Dabei ist die Schnittstelle vorzugsweise passiv ausgestaltet, so dass sie lediglich von anderen Modulen beauftragt wird, eine Nachricht zu holen. Der Active Message Handler ist dagegen vorzugsweise aktiv ausgestaltet und holt permanent Daten von der Kommunikationskomponente ab, wobei er keinen Anstoß benötigt.

Da die Kommunikationskomponente 20 in einem besonders bevorzugten Ausführungsbeispiel der Erfindung so ausgebildet ist, dass sie ein reines Transportmedium ist, das keine Daten aufbewahrt, erwartet die Kommunikationskomponente eine unmittelbare Bestätigung des Empfangs einer Nachricht, nachdem eine Servicekomponente eine Nachricht angefordert hat, da sie die Nachricht ansonsten zu lange speichern müsste. Dies hat zur Konsequenz, dass es nicht zweckmäßig ist, wenn die Servicekomponenten eine Nachricht abholen, diese vollständig verarbeiten und erst dann den Empfang bestätigen. Die Servicekomponenten bringen die Nachricht daher schnell an einen sicheren Ort und bestätigen anschließend sofort den Empfang.

Ein asynchroner Datenverkehr zwischen der Kommunikationskomponente und den Servicekomponenten kann somit dadurch erreicht werden, dass der AMH den Eingang von Nachrichten und deren Verarbeitung trennt. Der AMH hat lediglich die Aufgabe, Daten schnellstmöglich weiterzuleiten, die Servicekomponenten können die Nachrichten hingegen je nach Last unabhängig von der Kommunikationskomponente abarbeiten. Es findet somit eine Entkopplung statt, welche die Kommunikationskomponente unabhängig von den Servicekomponenten des Backends macht.

Daten können über einen Nachrichtenrückkanal an die Kommunikationskomponente übermittelt werden. Der Nachrichtenrückkanal ist vorzugsweise als Funktionsbibliothek ausgebildet und die Aufgabe dieser Funktionsbibliothek ist die Erleichterung des Umgangs der unterschiedlichen Komponenten des Systems mit der Kommunikationskomponente 20. Entsprechend bietet er Funktionsaufrufe etwa für den korrekten Aufbau von SOAP Envelopes oder er ermöglicht die einfache Übergabe von zu verschickenden Nachrichten.

Es kann jedoch auch zweckmäßig sein, Servicekomponenten ohne AMH und ohne Nachrichtenrückkanal auszubilden. Ferner kann es zweckmäßig sein, dass Servicekomponenten Nachrichten nicht aktiv an der Kommunikationskomponente abholen, sondern passiv von dieser beliefert werden. In diesem Fall kann die Kommunikationskomponente beispielsweise über entsprechende Adapter verfügen, welche Nachrichten direkt in eine Servicekomponente hineinschreiben.

Erfindungsgemäß umfassen die Servicekomponenten 40 des Backends eine Rohdatenkomponente 42 zur Verarbeitung von an den Clients erzeugten Rohdaten. Die Rohdatenkomponente ist in Fig. 1 auch mit R bezeichnet. Die Rohdatenkomponente übernimmt den Transport der am Frontend erzeugten Daten an die Umsysteme, wobei die Daten in einem besonders bevorzugten Ausführungsbeispiel der Erfindung zuvor wenigstens auf zwei Ebenen gefiltert werden. Die Rohdatenkomponente arbeitet die eingehenden Daten dabei vorzugsweise asynchron ab. Vor der Filterung der Daten in der Rohdatenkomponente werden die Daten vorzugsweise durch eine Archivkomponente 43 archiviert. Nach der Filterung werden sie einer oder mehreren Komponenten für eine Prüfung der Daten übergeben. Die Verteilung der Daten an die verschiedenen Servicekomponenten erfolgt über die Routing-Komponente 21 der Kommunikationskomponente.

Der erste Filter der Rohdatenkomponente erfüllt Anforderungen an den Datenschutz, indem bestimmte Feldinhalte, wie beispielsweise Kreditkartennummern, gelöscht werden. Ferner können je nach empfangendem Umsystem weitere Einzeldaten gelöscht werden, welche dem Umsystem nicht übermittelt werden sollen. Die zweite Filterebene kann durch die Umsysteme selbst definiert werden, so dass jedes Umsystem in der Lage ist, Filter zu benennen, die nur die für das Umsystem relevanten Datenbereiche beinhalten. So wird das zu verschickende und vom Umsystem zu verarbeitende Volumen auf ein notwendiges Maß reduziert. Gleichzeitig wird vorzugsweise eine Kopie der Liefereinheit an eine Archivkomponente gesendet.

Erfindungsgemäß umfassen die Servicekomponenten 40 des Backends ferner wenigstens eine Archivkomponente 43, welche in Fig. 1 auch mit A bezeichnet ist. Die Archivkomponente bietet anderen Komponenten Dienste an, um Daten zu archivieren oder aus einem Archiv 33 zu lesen. Ferner sollte in dem Archiv gesucht werden können.

Zusätzlich zur direkten Verwendung als Speicherort kann die Archivkomponente 43 auch implizit genutzt werden, wenn das Archiv als Zwischenstation für zu archivierende Aufrufe angegeben wird. In diesem Fall wird eine Nachricht auf dem Weg zum eigentlichen Empfänger über das Archiv geleitet und automatisch von der Archivkomponente archiviert. Ein Aufruf wird danach seriell an den eigentlichen Empfänger übermittelt. So kann ohne die Notwendigkeit von verteilten Transaktionen eine konsistente Datenhaltung zwischen Archiv und Empfänger einer Nachricht sichergestellt werden. Da auch die Zwischenstation selbst weitere Zwischenschritte für das Nachrichtenrouting angeben kann, besteht ferner die Möglichkeit, dass an zentraler Stelle im Backend die Archivierung von Nachrichten erzwungen werden kann, ohne dass eine Client-Applikation angepasst werden muss.

Die Archivkomponente spielt eine zentrale Rolle im Rahmen der GoB- und GoBS-Anforderungen an das System. Das Archiv 33 enthält das Grundbuch und bewahrt somit sämtliche Daten im Rahmen der gesetzlichen Aufbewahrungsfrist auf. Das Grundbuch ist ein Erfassungsprotokoll, welches sicherstellt, dass alle Geschäftsfälle chronologisch, vollständig und nachvollziehbar erfasst werden. Zur Erfüllung der Anforderungen an ein Grundbuch sind Daten beispielsweise auf unveränderliche Datenträger zu schreiben, wobei nicht nur die eigentlichen Belegdaten archivierungspflichtig sind, sondern auch die zugehörigen Stammdaten, die Protokolle oder auch entsprechende Programmversionen. Letztlich muss alles archiviert werden, was zur Nachvollziehbarkeit eines bestimmten Geschäftsablaufs erforderlich ist. Daneben erfüllt die Archivkomponente aber auch den Zweck, einem Korrektur-Client als Recherchepool relevante Daten Online zur Verfügung zu stellen. Der Korrektur-Client greift über die Archivkomponente auf die zu korrigierenden Datensätze und weitere Informationen zu, welche für die Korrektur benötigt werden. Dabei hat es sich als zweckmäßig erwiesen, dass der Korrektur-Client über die Kommunikationskomponente 20 mit der Archivkomponente 43 verbunden ist, um Daten in das System einzustellen, während er für eine Online-Recherche auf eine Dialogkomponente 41 zugreift, welche den Aufruf wiederum über die Kommunikationskomponente in der Archivkomponente durchführt.

Die Archivkomponente 43 wird über eine Schnittstelle an die Kommunikationskomponente 20 angebunden und Daten und Anfragen kommen über diesen Kanal in die Komponente und verlassen sie auf diesem Weg auch wieder. Die Archivkomponente wird von sehr vielen verschiedenen Lieferanten beliefert, so dass auch die gelieferten Datentypen entsprechend vielfältig sind. Eine der wichtigen Aufgaben der Archivkomponente kommt daher dem Routing zu, das die jeweiligen Daten an die richtige Stelle bringt.

Einen wichtigen Datentyp bei der Archivierung stellen die Rohdaten der Clients 10 dar. Bei diesen handelt es sich um Buchungen verursachende Belege, die aufbewahrungspflichtig sind. Rohdatensätze sind vorzugsweise feingranulare XML-Datensätze, die Geschäftsvorfälle auf unterster Ebene beschreiben. Neben Rohdaten werden auch Protokolle archiviert. Zu den Protokollen zählen beispielsweise Protokolle der Verarbeitung wie Fehlerlogs oder auch fachliche Verarbeitungsnachweise. In den Verarbeitungsnachweisen wird der Weg von Daten durch die unterschiedlichen Servicekomponenten im Backend aufgezeichnet, wodurch eine spätere Rekonstruktion gegeben ist. Protokolle und Verarbeitungsnachweise werden ebenfalls über die Schnittstelle zur Kommunikationskomponente 20 in die Archivkomponente eingeliefert und von dem Routing an eine Komponente zum Schreiben der Daten in das Archiv 33 gegeben.

Darüber hinaus umfassen die Servicekomponenten 40 des Backends wenigstens eine Sessionkomponente 42, welche in Fig. 1 auch mit Q1 bezeichnet ist. Die Sessionkomponente empfängt beispielsweise die Rohdatensätze der Clients 10 nach ihrer Archivierung durch die Archivkomponente 43, führt eine formale Syntaxprüfung durch und fasst die geprüften Datensätze zu definierten Gruppen zusammen. Diese Gruppen aus mehreren Datensätzen können auch als Session bezeichnet werden, wobei an den jeweiligen Frontends beliebige Sessions definiert werden, welche die Sessionkomponente aus den eingehenden Datensätzen zusammenstellt. Eine mögliche Session besteht beispielsweise aus den Daten zwischen den Zeitpunkten einer Kassenöffnung und eines Kassenschlusses an einem Frontend. Eine solche Kassensession wird im Folgenden auch als Journal bezeichnet.

Ferner sind andere Sessioneinheiten wie Kundensessions oder Vorgangssessions möglich. Eine Vorgangssession beinhaltet beispielsweise alle Daten eines Geschäftsvorgangs wie der Einzahlung eines Betrages auf ein Kundenkonto, während eine Kundensession alle Daten beinhalten kann, welche die Betreuung eines Kunden an einem Frontend betreffen. So kann eine Kundensession beispielsweise die Abfrage eines Kontostands, die Einzahlung eines Geldbetrages und den Kauf einer Ware betreffen. Die Sessionkomponente prüft die vollständigen Sessions vorzugsweise auf satz-, session- und sessionübergreifender Ebene. Bei Fehlern findet eine automatische Aussteuerung in eine Korrekturkomponente 48 statt.

Die Sessionkomponente 46 erfüllt den Anspruch, dass ausschließlich geprüfte und vollständig richtige Sessions die Komponente verlassen und an die Umsysteme oder eine andere Komponente im Backend gesendet werden. Die Prüfung schließt dabei unter anderem eine Reihe von Anforderungen ein, die in den Grundsätzen der ordnungsmäßigen Buchführung (GoB) und den Grundsätzen der ordnungsmäßigen DV-gestützten Buchführungssysteme (GoBS) begründet sind. Von Clients erzeugte Rohdaten werden einer horizontalen Prüfung auf innere Konsistenz unterzogen, was beispielsweise die Prüfung umfassen kann, ob eine Menge multipliziert mit einem Einzelpreis einen Gesamtpreis ergibt. Ferner erfolgt eine vertikale Prüfung der gesamten Session auf Konsistenz, was beispielsweise die Prüfung umfasst, ob die Summe von Einzelbeträgen addiert zum Kassenanfangsbestand gleich dem Kassenendbestand ist. Darüber hinaus erfolgt eine Anschlussprüfung der einzelnen Sessions, ob ein Kassenanfangsbestand des aktuellen Tages mit dem Kassenendbestand des Vortages übereinstimmt. Die Begriffe der horizontalen und vertikalen Prüfung können durch eine Tabellenansicht veranschaulicht werden, bei der jeder Einzelsatz eine Zeile bildet.

Die technische Umsetzung der einzelnen Prüfungen in der Sessionkomponente 46 erfolgt vorzugsweise durch zwei Bereiche innerhalb der Komponente. Ein erster Bereich sammelt und sortiert die eintreffenden Daten, während ein zweiter Bereich die fertigen Pakete übernimmt und eine Vielzahl von Prüfungen an den Daten durchführt. Die Übernahme von Daten in die Sessionkomponente erfolgt vorzugsweise über eine Schnittstelle, welche in Verbindung mit der Kommunikationskomponente 20 steht. Von der Schnittstelle werden die Daten vorzugsweise zunächst in einem Persistenzmedium wie einer Datenbank gesammelt. Dieses Medium wird zweckmäßigerweise von einem Überwachungsservice überwacht, der unter anderem erkennt, wann eine Session vollständig ist. Gleichzeitig erkennt die Komponente, dass ein bestimmtes Zeitintervall für das Warten auf Rohdatensätze abgelaufen ist. Die Komponente erkennt somit, dass eine Session voraussichtlich nicht mehr vervollständigt werden wird und gibt eine Fehlermeldung an eine Korrekturkomponente 48.

Daneben liefert der Überwachungsservice die Informationen zu vollständigen Sessions an den nächsten Bereich der Sessionkomponente. In diesem Bereich werden die Sessions zusammengestellt, indem die entsprechenden Daten in korrekter Reihenfolge dem Persistenzmedium entnommen und aus den Einzelsätzen ein zusammenhängender Block - eine Session - gebildet werden. Die Session wird nun vorzugsweise nacheinander an weitere Prüfblöcke weitergeleitet. Ein erster Block führt Prüfungen auf interne Konsistenz durch. Ein zweiter Block sorgt für Prüfungen zwischen unterschiedlichen Sessions. Sind alle Prüfungen erfolgreich verlaufen, werden die Sessions für den Transport vorbereitet und weiter geleitet. Sind bei der Prüfung Fehler aufgetreten, wird die Korrekturkomponente 48 mit den entsprechenden Informationen versorgt.

Die Übertragung der durch die Sessionkomponente 46 geprüften Daten erfolgt über die Kommunikationskomponente 20 und als Empfänger der Daten kommen wiederum die Archivkomponente 43, die Rohdatenkomponente 42, die Korrekturkomponente 48 und/oder eine Abstimmungskomponente 47 in Betracht. Die Daten werden für spätere Rückgriffe in das Archiv 33 eingelagert und eine Rohdatenkomponente 42 kann die Daten so filtern, dass sie strukturiert den Umsystemen zugeführt werden können.

Die Abstimmungskomponente 47 ist in Fig. 1 auch mit Q2 bezeichnet und übernimmt die Vorverarbeitung und Abstimmung für das Rechnungswesen des gesamten Retailsystems. Die Abstimmungskomponente erhält die geprüften Sessions der Sessionkomponente 46 und nimmt eine Abstimmung und Kumulation der Daten vor. Sie bildet Summen, nimmt semantische Korrektheitsprüfungen vor und aggregiert Daten. Dabei ist es vorteilhaft, dass die Abstimmungskomponente 47 beispielsweise Daten von Kassen an den Frontends für unterschiedliche Rechnungswesen aufbereiten kann. Werden an einer Kasse beispielsweise Vorgänge für mehrere Dienstleitungen abgerechnet, welche jedoch fachlich verschiedenen Rechnungswesen zuzuordnen sind, müssen die Abrechnungen der einzelnen Dienstleistungen vollständig voneinander getrennt werden. Dies ist insbesondere dann der Fall, wenn es sich um mehrere eigenständige Unternehmen handelt, welche die Dienstleistungen anbieten.

Werden in einer Filiale eines Postunternehmens beispielsweise postalische Leistungen, ein Bankbetrieb und Dienstleistungen eines Telekommunikationsanbieters angeboten, enthält ein Datenstrom eines Clients 10 Datensätze für verschiedene Rechnungswesen. Da jedoch nur vollständige Kassensessions als abrechnungstechnische Einheiten akzeptiert werden, muss jedes teilnehmende Unternehmen auch die Datensätze der anderen Unternehmen mit berücksichtigen. Da jedoch nicht jedes Unternehmen die Datensätze der anderen Unternehmen erhalten soll, werden die in der Abstimmungskomponente 47 eingehenden Journale nach den spezifischen Regelwerken der teilnehmenden Unternehmen getrennt kumuliert. Dabei folgen die Kumulationsregeln genau den Anforderungen der abrechnenden Systeme. Gleichzeitig werden die Rohdatensätze in ein anderes Format transformiert, das buchhaltungstechnisch von den einzelnen Rechnungswesen verarbeitet werden kann.

Sind alle Rohdatensätze einer Session transformiert und kumuliert, findet eine Abstimmung statt. Die Abstimmungskomponente stellt somit sicher, dass zu verbuchende Daten gleiche Buchungswerte auch bei unterschiedlicher Zusammensetzung tragen. Die vorzugsweise im XML-Format vorliegenden und als Session verpackten Daten werden vorzugsweise in einer für den Empfänger buchbaren Struktur aufbereitet.

Der technische Aufbau der Abstimmungskomponente 47 entspricht im Wesentlichen dem Aufbau der Sessionkomponente 46, so dass ebenfalls eine Schnittstelle zur Übernahme von Datensätzen aus der Kommunikationskomponente 20 vorgesehen ist. Vorzugsweise erhält die Abstimmungskomponente 47 nur Daten von der Sessionkomponente 46. Die Daten werden in der Abstimmungskomponente 47 in einem Persistenzmedium gespeichert und von verschiedenen Funktionsbereichen bearbeitet, welche die Transformation, Kumulation und Abstimmung der Daten durchführen. Nach der Bearbeitung werden die Daten zu Paketen gepackt und an die verschiedenen Empfänger versendet. In einem besonders bevorzugten Ausführungsbeispiel der Erfindung wird der Archivkomponente 43 erneut eine Kopie der Daten übermittelt.

Werden von der Sessionkomponente 46 oder der Abstimmungskomponente 47 Datensätze als fehlerhaft erkannt, werden sie der Korrekturkomponente 48 übergeben. Dabei hat es sich als vorteilhaft erwiesen, dass die Verarbeitung eines fehlerhaften Datensatzes durch die Korrekturkomponente bis zur Beendigung der Korrektur unterbrochen wird. Die Fehlerbehebung erfolgt vorzugsweise im Datensatz selbst und/oder es kann eine Korrektur der prüfenden Einheiten eingeleitet werden.

Da innerhalb der Korrekturkomponente insbesondere buchhalterische Kriterien verwirklicht sind, wird ein fehlerhafter Datensatz zweckmäßigerweise nicht verändert, sondern zur Speicherung an die Archivkomponente 43 übermittelt. Die Korrekturkomponente erzeugt gegebenenfalls im Zusammenspiel mit einem Korrektur-Client einen neuen Datensatz mit der gleichen Routinginformation wie der fehlerhafte Datensatz. Der neue Datensatz erhält eine Referenz auf den alten Datensatz und die erforderliche Fehlerkorrektur. Dabei müssen vorzugsweise keine vollständigen Sessions bzw. Journale korrigiert werden, sondern die Korrektur einzelner Datensätze ist möglich.

Neben fehlerhaften Datensätzen der Sessionkomponente 46 und der Abstimmungskomponente 47 können der Korrekturkomponente auch Datensätze aus anderen Systemkomponenten übermittelt werden. Vorteilhaft ist beispielsweise, dass Datensätze, welche von den Umsystemen beanstandet wurden, ebenfalls durch die Korrekturkomponente korrigiert werden können. Dabei können die Fehlermeldungen der Umsysteme ebenfalls an die Korrekturkomponente übermittelt werden oder Fehlermeldungen gehen von den Umsystemen an eine Einlieferungskomponente, welche diese direkt an eine Auftragsvergabekomponente 60 übergibt.

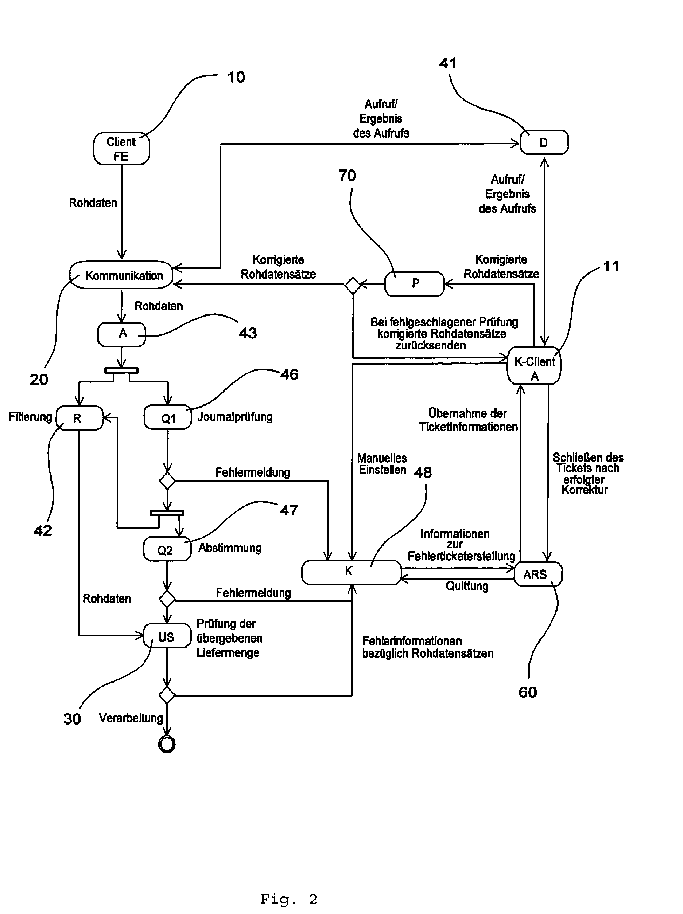

Die Verfahrensabläufe bei der Abwicklung eines Korrekturauftrags durch die Korrekturkomponente 48 sind beispielhaft in Fig. 2 dargestellt. An einem Client 10 erzeugte Rohdaten werden über die zentrale Kommunikationskomponente 20 an die Servicekomponenten des Backends übergeben und vorzugsweise zuerst durch die Archivkomponente 43 archiviert. Die Rohdaten gelangen dann für eine Filterung zur Rohdatenkomponente 42 und zur Journalbildung und -prüfung in die Sessionkomponente 46. Stellt die Sessionkomponente einen fehlerhaften Datensatz fest, sendet sie eine Fehlermeldung an die Korrekturkomponente 48. Auch wenn dies in der Fig. 2 nicht explizit dargestellt ist, erfolgt die Übermittlung dieser Fehlermeldung vorzugsweise ebenfalls über die Kommunikationskomponente 20.

In der Sessionkomponente erstellte und geprüfte Journale werden ebenfalls über die Routing-Komponente 21 der Rohdatenkomponente 42 und der Abstimmungskomponente 47 übergeben. In der Abstimmungskomponente erfolgt eine Abstimmung der Journale, wobei bei Fehlern eine Fehlermeldung an die Korrekturkomponente übermittelt wird.

Die Korrekturkomponente 48 liefert eine Fehlermeldung an eine Auftragsvergabekomponente 60, die beispielsweise durch ein Action Request System (ARS) gebildet werden kann. Diese Auftragsvergabekomponente beinhaltet ein Ticketing-System, das zur Zuweisung und Steuerung von Arbeitsaufträgen genutzt wird. Es wird genutzt, um Korrekturaufträge entgegenzunehmen, deren Bearbeitung zu dokumentieren und um Korrekturaufträge an andere organisatorische Einheiten weiterzuleiten. Die Auftragsvergabekomponente legt ein ARS-Ticket mit einem initialen Anfangs-Status (z.B. "offen") an. Jede Verarbeitungs- und Zustandsänderung während der Bearbeitung des Tickets wird aus dem Korrektursystem an das ARS übergeben. ARS übergibt dann automatisch diese Informationen an die Korrekturkomponente 48 zur Synchronisierung (z.B. von "offen" auf "in Bearbeitung"). Nach Annahme des Tickets durch einen Mitarbeiter des Korrekturmanagements beispielsweise an einem Korrektur-Client 11 folgt die automatische Einarbeitung aller Informationen des betrachteten Tickets in das Korrekturmanagement.

Für die Analyse des Fehlers müssen zusätzlich zu den im Fehlerticket enthaltenen Informationen weitere Daten herangezogen werden, so dass für die Korrektur-Clients ein lesender Zugriff auf Datenbanken des Systems ermöglicht werden muss. Bei einer solchen Recherche im Rahmen des Korrekturprozesses wird somit auf verschiedene Systeme zugegriffen und der Zugriff erfolgt vorzugsweise möglichst zeitnah. Dadurch ist gewährleistet, dass der Vorgang der Übermittlung Korrektur-relevanter Daten den Korrekturprozess zeitlich nicht beeinträchtigt.

Vorzugsweise erfolgt der Zugriff auf das Archiv 33 und/oder andere Umsysteme durch einen Korrektur-Client über die Dialogkomponente 41, welche einen statuslosen Online-Zugriff ermöglicht. Der jeweilige Korrektur-Client erzeugt einen Suchauftrag und übermittelt diesen vorzugsweise über einen Web-Service an die Dialogkomponente 41. Diese verarbeitet den Aufruf und übermittelt ihn über die Kommunikationskomponente 20 an die Archivkomponente 43. Der Aufruf wird an das Routing der Archivkomponente übergeben und das Routing leitet den Aufruf an eine Komponente zum Lesen von Daten aus dem Archiv 33 weiter, welche den eigentlichen Aufruf durchführt und die Antwort über die Schnittstelle der Archivkomponente und die Kommunikationskomponente zurück an die Dialogkomponente 41 gibt.

Es handelt sich dabei um ein asynchrones Verfahren, bei dem Verarbeitungsprozesse voneinander entkoppelt werden. Der Aufruf im Archiv wird daher von einer Komponente zeitversetzt und unabhängig vom Absender des Aufrufs am Korrektur-Client durchgeführt. Der Absender sendet einen schnellen Online-Aufruf an die Dialogkomponente, er wartet in seiner eigenen Verarbeitung jedoch nicht auf das Ergebnis des asynchronen Prozesses, sondern arbeitet nach Versand des Auftrags weiter. Der Suchauftrag wird von der Archivkomponente verarbeitet und das Ergebnis wiederum über den schnellen Weg der Dialogkomponente an den Recherche-Client übermittelt.

Liegen dem Korrektur-Client alle erforderlichen Daten vor, ist zu berücksichtigen, dass die anschließende Korrektur vorzugsweise auf fehlerhaften Rohdatensätzen erfolgt und nicht auf Journalen. Die Korrektur-Clients lesen die fehlerhaften Datensätze aus dem Archiv aus, greifen auf Korrekturanweisungen zu und korrigieren den fehlerhaften Datensatz.

Vor der Einstellung der Korrekturen in das System können die korrigierten Rohdatensätze einer Prüfkomponente 70 übermittelt werden. Die Prüfkomponente führt eine Vorprüfung durch, indem die normale Verarbeitung simuliert und damit die Richtigkeit und Vollständigkeit der Korrektur bestätigt wird. Dabei wendet die Prüfkomponente vorzugsweise die gleichen Regeln an wie die Session- und die Abstimmungskomponente. Es hat sich jedoch nicht als zweckmäßig erwiesen, die Prüfung in den beiden Komponenten selbst durchzuführen, sondern eine eigenständige Prüfkomponente 70 mit der gleichen Regelbasis wie die Session- und Abstimmungskomponente ist vorteilhaft. Als Antwort auf einen Prüfantrag sendet die Prüfkomponente das Ergebnis der Prüfung unter Hinweis auf den Auftrag an den Korrektur-Client zurück. Nach erfolgreicher Prüfung durch die Prüfkomponente P werden die korrigierten Daten über die Kommunikationskomponente an die Servicekomponenten des Backends übergeben. Zusätzlich wird die gesamte Korrekturdokumentation eingeliefert und beides durch die Archivkomponente archiviert.

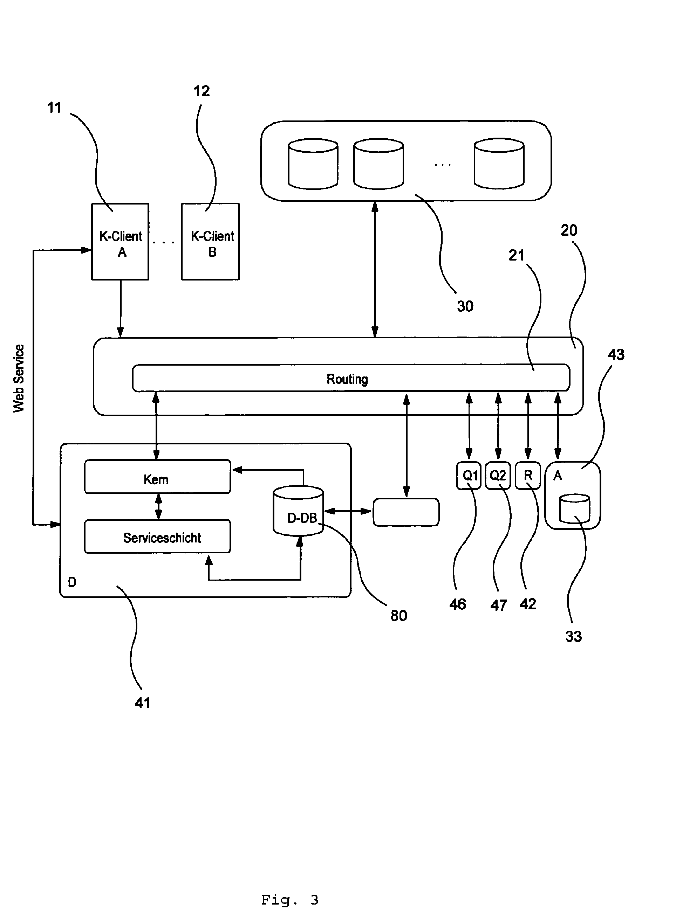

Ein Ausführungsbeispiel für einen möglichst schnellen Zugriff der Korrektur-Clients auf das Archiv 33 und/oder Umsysteme 30 und deren Datenbanken ist in Fig. 3 dargestellt. Dabei greifen mehrere Korrektur-Clients 11 und 12 vorzugsweise über einen Web-Service direkt auf die Dialogkomponente 41 zu, um einen statuslosen Online-Zugriff auf Daten zu erhalten, in welchem Korrektur relevante Daten hinterlegt sind. Zu den Umsystemen zählen in diesem Zusammenhang jegliche Archive und/oder Datenbanken, in denen Daten hinterlegt wurden. Die Dialogkomponente hat über die Kommunikationskomponente 20 Zugriff auf andere Servicekomponenten und Umsysteme, so dass sie den Aufruf von Daten in den Systemen initiieren oder selbst durchführen kann.

Nachrichten werden von der Dialogkomponente 41 statuslos und synchron bearbeitet, wodurch eine schnelle Kommunikation von unter 30 Sekunden ermöglicht werden kann, jedoch kein verlässlicher Transport gegeben ist. Über die Dialogkomponente 41 können sowohl die Clients 10 bei Geschäftsvorgängen am Frontend Online-Aufrufe tätigen, als auch die Korrektur-Clients 11 und 12 Online-Aufrufe in Datenbanken des Systems starten.

Über die Dialogkomponente werden daher vorzugsweise Abfragen von Geschäftslogik oder Datenabfragen in den Umsystemen durchgeführt, es wird jedoch keine Verarbeitung von Daten vorgenommen. Um eine schnelle Kommunikation zu gewährleisten, hat es sich als vorteilhaft erwiesen, dass Anfragen, welche zu lange dauern oder scheitern, durch einen Timeout künstlich beendet werden. So kann der Korrektur-Client das Scheitern frühzeitig erkennen und entsprechend reagieren.

Sowohl Korrektur-Clients als auch die Umsysteme 30 und das Archiv 33 stellen bei Aufrufen über die Dialogkomponente 41 Daten vorzugsweise im XML-Format bereit. Falls angeschlossene Systeme nicht mit dem Datenmodell der Korrektur-Clients arbeiten, kann eine entsprechende Transformation der Nachrichten/Daten erforderlich sein. Dies gilt sowohl für die Anfrage des Clients als auch für die Antwort des Umsystems bzw. Archivs. Die Transformation erfolgt vorzugsweise im Rahmen einer Umwandlung von XML-Dateien mit der Formatsprache XSL (Extensible Stylesheet language). Die Formatsprache XSL besteht aus zwei Komponenten, von denen die erste Komponente zur Formatierung von XML-Dateien dient. Eine zweite Komponente transformiert XML-Dateien in andere XML-Dateien, wobei für die Transformationskomponente die Bezeichnung XSLT (XSL Transformation) geläufig ist und hier verwendet wird. Datenmodelle von sendenden Komponenten werden somit durch hinterlegte XSLTs in das jeweilige Datenmodell der empfangenden Komponente transformiert.

Die Dialogkomponente 41 ist vorzugsweise über Web-Services an einen Korrektur-Client angebunden. Auch die Clients 10 können über Web-Services einen direkten Zugriff auf die Dialogkomponente haben, um über diese einen statuslosen Online-Aufruf durchzuführen. Dabei können von der Dialogkomponente vorzugsweise wenigstens drei Arten von Aufrufen durchgeführt werden. Zum Einen können Aufrufe erfolgen, welche ausschließlich die Businesslogik der Dialogkomponente nutzen. Die Businesslogik ist in der Dialogkomponente hinterlegt und kommt ohne Aufrufe bei Umsystemen aus. Die Logik kann ein komplexer Algorithmus sein, der aufgrund sich stetig verändernder Parameter nicht fest im Frontend hinterlegt werden sollte. Dabei handelt es sich beispielsweise um eine Zinsberechnungskomponente, die nach einer einheitlichen Formel für alle Anwendungen Zinsberechnungen durchführt. Aufrufe an Umsystemen sind dabei nicht erforderlich.

Zum Anderen kann die Dialogkomponente Aufrufe in Form eines einfachen Durchreichens von Daten an oder von einem Umsystem durchführen. Hierbei liegt keine Logik im Aufruf selbst vor, sondern die Dialogkomponente leitet den Aufruf lediglich an eine Komponente weiter. Dieser Aufruf kann beispielsweise beim Aufruf von fehlerhaften Rohdatensätzen aus dem Archiv 33 angewendet werden. Die beiden genannten Aufrufe werden in einer Kernschicht der Dialogkomponente durchgeführt.

Darüber hinaus können Aufrufe aus Logik und Datenaufruf, sowie aus mehreren Datenaufrufen bestehen. Solche komplexen Vorgänge werden vorzugsweise von einer Serviceschicht innerhalb der Dialogkomponente abgehandelt. Innerhalb der Serviceschicht befindet sich die gesamte Funktionalität zur Abwicklung des Aufrufs. Über einen einzelnen Aufruf eines Korrektur-Clients an der Dialogkomponente kann so eine beliebig große Kaskade von Aufrufen in unterschiedlichster Abhängigkeit erfolgen. Auf diesem Wege können jegliche Daten aus einem Archiv 33 und/oder Umsystemen 30 zu einem Korrektur-Client übermittelt werden.

Erfolgt ein Online-Aufruf durch einen Korrektur-Client, wird der Aufruf an ein Modul innerhalb der Dialogkomponente übergeben, welches ein Routing der Nachrichten übernimmt. Innerhalb dieser Routingschicht erfolgt die Entscheidung, welcher der drei genannten Aufruftypen zum Tragen kommt. Ferner wird das jeweils passende Protokoll für den eigentlichen Aufruf an ein Umsystem festgelegt. Die Dialogkomponente umfasst eine Transformationsschicht, welche die Aufgabe hat, ankommende Daten im Datenmodell des Korrektur-Clients in das für das Zielsystem passende Datenmodell zu transformieren. Dazu wird vorzugsweise ein hinterlegtes XSLT geladen. Beim umgekehrten Weg einer Antwort von einem Umsystem zum Korrektur-Client fällt die Transformation der Daten in das Datenmodell des Clients ebenfalls in den Aufgabenbereich der Transformationsschicht.

Die Dialogkomponente 41 ermöglicht somit einen Zugriff auf fehlerhafte Datensätze für ein Korrekturmanagement. Die Dialogkomponente hostet dabei für den Korrektur-Client den Web-Service für einen Korrekturauftrag, über den der Client arbeitet. Der Web-Service stellt vorzugsweise Methoden für Funktionen wie das Anlegen, Suchen, Laden und Aktualisieren bereit. In einem besonders bevorzugten Ausführungsbeispiel der Erfindung erfolgt die Erzeugung einer eindeutigen Identifikation für einen Korrekturauftrag ebenfalls durch die Serviceschicht der Dialogkomponente 41. Diese beantragt dazu eine ARS-Ticketnummer bei der Auftragsvergabekomponente 60 und generiert damit die Korrekturauftrag-ID. Des Weiteren werden von der Dialogkomponente Attribute aus dem Fehlerprotokoll extrahiert. Die Korrekturauftrag-ID und die extrahierten Merkmale des Fehlerprotokolls werden in eine Datenbank 80 der Dialogkomponente eingestellt.

Liegen dem Korrektur-Client alle erforderlichen Daten für die Korrektur eines fehlerhaften Datensatzes vor, führt er eine Korrektur des Datensatzes durch. Der korrigierte Datensatz wird vorzugsweise über die Kommunikationskomponente 20 in das System eingeliefert, so dass Datenlieferungen der Korrektur-Clients wie Lieferungen der Geschäftsclients 10 behandelt werden können.

### Bezugszeichenliste:

- 10: Client, Frontend
- 11: Korrektur-Client A
- 12: Korrektur-Client B
- 20: Kommunikationskomponente
- 21: Routing-Komponente der Kommunikationskomponente
- 30: Umsystem, Datenbank
- 33: Archiv der Archivkomponente
- 40: Servicekomponenten des Backends
- 41,D: Dialogkomponente
- 42,R: Rohdatenkomponente
- 43,A: Archivkomponente
- 46,Q1: Sessionkomponente
- 47,Q2: Abstimmungskomponente
- 48,K: Korrekturkomponente
- 50: Sicherheitsschicht
- 60: Auftragsvergabekomponente, Action Request System - ARS
- 70,P: Prüfkomponente
- 80,D-DB: Datenbank der Dialogkomponente

## Patentansprüche

1. Anordnung von Vorrichtungen zur Prüfung und Korrektur von buchungsrelevanten Daten, bestehend aus wenigstens einem Client (10) in einem Frontend, der über eine Kommunikationskomponente (20) mit einem Backend in Verbindung steht, wobei das Backend durch mehrere Servicekomponenten (40) gebildet wird und an die Kommunikationskomponente (20) ferner mehrere Umsysteme (30) angeschlossen sind und der Client (10) Mittel zur Erzeugung von Daten und zur Übermittlung der Daten über die Kommunikationskomponente (20) an die Servicekomponenten (40) umfasst, wobei die Servicekomponenten (40) Mittel zur Aufbereitung der Daten aufweisen,
**gekennzeichnet**
**durch** folgende Merkmale:
- Archivkomponente (43), umfassend Mittel zur Archivierung von Daten in wenigstens einem Archiv (33);
- Sessionkomponente (46), umfassend Mittel zur Bildung von Gruppen (Sessions) aus mehreren Datensätzen;
- Abstimmungskomponente (47), umfassend Mittel zur Kumulation und Abstimmung von durch die Sessionkomponente (46) gebildeten Gruppen aus Datensätzen;
- Rohdatenkomponente (42), umfassend Mittel zur Filterung von Datensätzen und Mittel zur Paketierung und Übermittlung der Datensätze über die Kommunikationskomponente (20) an Umsysteme (30);
- Korrektur-Client (11;12), umfassend Mittel zur Abfrage und Korrektur von fehlerhaften Datensätzen in dem Archiv (33) und/oder den Umsystemen (30), wobei der Korrektur-Client (11;12) über die Kommunikationskomponente (20) an die Archivkomponente (43) angeschlossen ist und der Korrektur-Client (11;12) Mittel zum Einstellen korrigierter Datensätze in das Archiv (33) aufweist;
- Auftragsvergabekomponente (60), umfassend Mittel zur Erzeugung und Übermittlung von Korrekturaufträgen an einen Korrektur-Client (11;12);
- Korrekturkomponente (48), umfassend Mittel zum Empfang von Fehlermeldungen der Sessionkomponente (46), der Abstimmungskomponente (47), der Rohdatenkomponente (42) und/oder der Umsysteme (30) und Mittel zur Übergabe der Fehlermeldungen an die Auftragsvergabekomponente (60);
- Kommunikationskomponente (20), umfassend eine Routing-Komponente (21) zur Steuerung und Übermittlung von Nachrichten zwischen den Servicekomponenten (40), den Clients (10), den Korrektur-Clients (11;12) und den Umsystemen (30).

2. Anordnung nach Anspruch 1,
**dadurch gekennzeichnet,**
**dass** die Anordnung eine Dialogkomponente (41), umfassend Mittel zum Empfangen von Online-Aufrufen über einen Web-Services aufweist, wobei die Dialogkomponente (41) an die Kommunikationskomponente angeschlossen ist und Mittel zur Übermittlung des Aufrufs über die Kommunikationskomponente (20) an andere Servicekomponenten (40) umfasst, wobei die Dialogkomponente (41) ferner Mittel zum Empfangen von Ergebnissen eines Aufrufs von anderen Servicekomponenten und zur Übermittlung der Ergebnisse über einen Web-Service umfasst und dass der Korrektur-Client (11;12) über einen Web-Service an die Dialogkomponente (41) angeschlossen ist.

3. Anordnung nach einem oder beiden der Ansprüche 1 und 2,
**dadurch gekennzeichnet,**
**dass** die Anordnung eine Prüfkomponente (70) umfasst, welche Mittel zur Prüfung der von einem Korrektur-Client (11;12) erzeugten korrigierten Datensätze aufweist.

4. Verfahren zur Prüfung und Korrektur von buchungsrelevanten Rohdatensätzen, bei dem Daten an einem Client (10) in einem Frontend erzeugt und zur Aufbereitung und Weiterleitung über eine Kommunikationskomponente (20) an mehrere Servicekomponenten (40) eines Backends übermittelt werden, wobei die Daten nach der Aufbereitung durch eine oder mehrere Servicekomponenten (40) an Umsysteme (30) übermittelt werden,
**gekennzeichnet**
**durch** folgende Schritte:
- Archivierung von an einem Client (10) erzeugten Daten durch eine Archivierungskomponente (43) in einem Archiv (33) ;
- Bildung von Gruppen (Sessions) aus mehreren Datensätzen durch eine Sessionkomponente (46);
- Kumulation und Abstimmung der von der Sessionkomponente (46) gebildeten Gruppen aus mehreren Datensätzen durch eine Abstimmungskomponente (47) ;
- Filterung von aus der Abstimmungskomponente (47) stammenden Datensätzen durch eine Rohdatenkomponente (42) und Paketierung und Übermittlung der gefilterten Daten an Umsysteme (30); wobei
- eine Fehlermeldung durch die Sessionkomponente (46), die Abstimmungskomponente (47) oder ein Umsystem (30) erzeugt wird, falls eine dieser Komponenten einen fehlerhaften Datensatz feststellt und Übermittlung der Fehlermeldung an eine Korrekturkomponente (48);
- Übermittlung der Fehlermeldung von der Korrekturkomponente (48) an eine Auftragsvergabekomponente (60);
- Erzeugung eines Korrekturauftrags durch die Auftragsvergabekomponente (60) und Übermittlung des Korrekturauftrags an wenigstens einen Korrektur-Client (11;12);
- Abfrage von fehlerhaften Datensätzen in dem Archiv (33) und/oder einem Umsystem (30) durch den Korrektur-Client (11;12);
- Übermittlung der abgefragten Daten an den Korrektur-Client (11;12) und Korrektur der Datensätze durch den Korrektur-Client (11;12),
- Einstellen von korrigierten Datensätzen in das Archiv (33) durch den Korrektur-Client (11;12), wobei die korrigierten Datensätze über die
Kommunikationskomponente (20) in die Archivkomponente (43) eingeliefert werden; und
- eine Routing-Komponente (21) der Kommunikationskomponente (20) zur Durchführung des Verfahrens eine Steuerung und Übermittlung von Nachrichten zwischen den Servicekomponenten (40), den Clients (10), den Korrektur-Clients (11;12) und den Umsystemen (30) übernimmt.

5. Verfahren nach Anspruch 4,
**dadurch gekennzeichnet,**
**dass** fehlerhafte Datensätze in dem Archiv (33) und/oder einem Umsystem (30) abgefragt werden, indem der
Korrektur-Client (11;12) die Abfrage über einen Web-Service an eine Dialogkomponente (41) übermittelt, welche den Aufruf verarbeitet und dabei auf ein Umsystem (30) und/oder über die Archivkomponente (43) auf das Archiv (33) zugreift und die abgefragten Daten über den Web-Service an den Korrektur-Client (11;12) übermittelt werden.

6. Verfahren nach Anspruch 5,
**dadurch gekennzeichnet,**
**dass** die Dialogkomponente (41) eine Abfrage in einem Archiv (33) über die Kommunikationskomponente (20) an die Archivkomponente (43) übermittelt, welche das Ergebnis der Abfrage ebenfalls über die Kommunikationskomponente (20) an die Dialogkomponente (41) zurück übermittelt.

7. Verfahren nach einem oder mehreren der Ansprüche 4 bis 6,
**dadurch gekennzeichnet,**
**dass** eine Prüfkomponente (70) die von einem Korrektur-Client (11;12) erzeugten korrigierten Datensätze vor der Einstellung in das Archiv (33) prüft.

8. Verfahren nach einem oder mehreren der Ansprüche 4 bis 7,
**dadurch gekennzeichnet,**
**dass** der Korrektur-Client (11;12) einen korrigierten Datensatz mit der Routinginformation des fehlerhaften Datensatzes und einer Referenz auf den fehlerhaften Datensatz versieht.

9. Computerlesbares Medium, das Befehle zum Ausführen der Schritte des Verfahrens nach einem oder mehreren der Ansprüche 4 bis 8 auf einem Computermittel umfasst.
